# EUROPEAN PATENT SPECIFICATION

(11) **EP 1 619 119 B1**
(45) Date of publication and mention of the grant of the patent: **05.09.2007**
(21) Application number: 05106775.9
(22) Date of filing: 22.07.2005
(51) Int. Cl.: B64C 31/028, B64C 9/16, B64C 9/28

(54) **Wing assembly for an ultralight aircraft, and ultralight aircraft provided with such wing assembly**
Flügelanordnung für Ultraleichtflugzeuge und Ultraleichtflugzeuge mit einer solchen Flügelanordnung
Ensemble d'aile pour avions ultralégers et avion ultraléger avec cette aile

(30) Priority: 23.07.2004 IT TO20040513
(43) Date of publication of application: 25.01.2006
(73) Proprietor: I.C.P. S.r.l., Frazione Gallareto 14026 Piova' Massaia (IT)
(72) Inventor: Razzano, Tancredi, 14020 Piova' Massaia (IT)
(74) Representative: Jorio, Paolo

(56) References cited:
- FR-A- 655 603
- FR-A- 1 024 467
- US-A- 2 222 935

## Description

The present invention concerns a wing assembly for an ultralight aircraft and an ultralight aircraft provided with such wing assembly.

In the field of design and production of ultralight aircraft, i.e. aircraft that have a maximum weight at take-off equal to four hundred and fifty kilograms and a stall speed below 65 kilometres per hour, the essential priority objectives to be achieved are basically three: the first is to maintain a limited stalling speed in order to permit landing also on so-called "short" runways, the second is to permit high maximum and cruising speeds to be reached, and the third is to limit as far as possible the overall weight of the aircraft, the latter moreover being important also for the other two objectives stated above.

One of the parts of the aircraft that require most attention to achieve the above objectives are the wings. Aircraft are therefore known in which each wing comprises a fixed intermediate elongated portion integrally connected to the aircraft fuselage, a front portion commonly known as slat, and a rear elongated portion commonly known as flap. The rear elongated portion is generally hinged to the intermediate portion to rotate with respect to the fixed elongated portion around a longitudinal axis (orthogonal to the aircraft travel direction) driven by its own dedicated command and control unit operated by the pilot to vary the lift capacity of the wing profile. The front elongated portion is coupled to the fixed elongated portion so that it moves parallel with respect to the fixed portion between two extreme stroke end positions solely as a result of the aerodynamic action. In other words, the front portion moves freely without any control by the pilot, who therefore controls the aircraft by varying the position of the rear portion only. This control, however, requires a good knowledge of the aircraft and considerable flying experience but even this is not always sufficient to guarantee flight safety.

US2,222,935 discloses a wing assembly including all the features of the preamble of the independent claim 1, in which the transmission means positioned between the moved portions of the wings and the main actuator comprises an endless chain, and a gear transmission. The needful gear reduction transmission disposed between the motor and the endless chain introduces backlash in the transmission, so the transmission disclosed does not enable to move the movable portions of both wings in a simultaneous and synchronous manner.

FR 655 603 discloses a transmission in which a rotating bar move the movable parts of a single wing.

The aim of the present invention is to produce a wing assembly for an ultralight aircraft, which solves in a simple and economic manner the problems of the known solutions and at the same time results in high efficiency and functional reliability, in addition to limited weight and overall dimensions.

According to the present invention a wing assembly for an ultralight aircraft is provided, comprising two opposed wings, each of which comprises a fixed intermediate elongated portion designed to be integrally connected to a fuselage of the aircraft, and two respective movable elongated portions arranged on opposite sides of the related intermediate elongated portion; one single main actuator for operation of said movable elongated portions of both said wings, and transmission means positioned between said movable elongated portions and said main actuator, said main actuator comprises one single electric drive motor; said transmission means comprises lever transmission means to simultaneously and synchronously move said movable elongated portions with respect to said related fixed elongated portions.

The invention will now be described with reference to the attached drawings, which illustrate a non-limiting implementation example, in which:
figure 1 shows schematically and partially a plan view of a preferred embodiment of the aircraft provided with the wing assembly according to the present invention; and
figure 2 is a schematic section on a highly enlarged scale and with parts removed for the sake of clarity according to the line II-II of figure 1;
figure 3 is a figure analogous to figure 2 and illustrates some details of figure 2 arranged in a different functional position; and
figures 4 and 5 are schematic sections on a highly enlarged scale and with parts removed for the sake of clarity according to the line IV-IV and, respectively, according to the line V-V of figure 1.

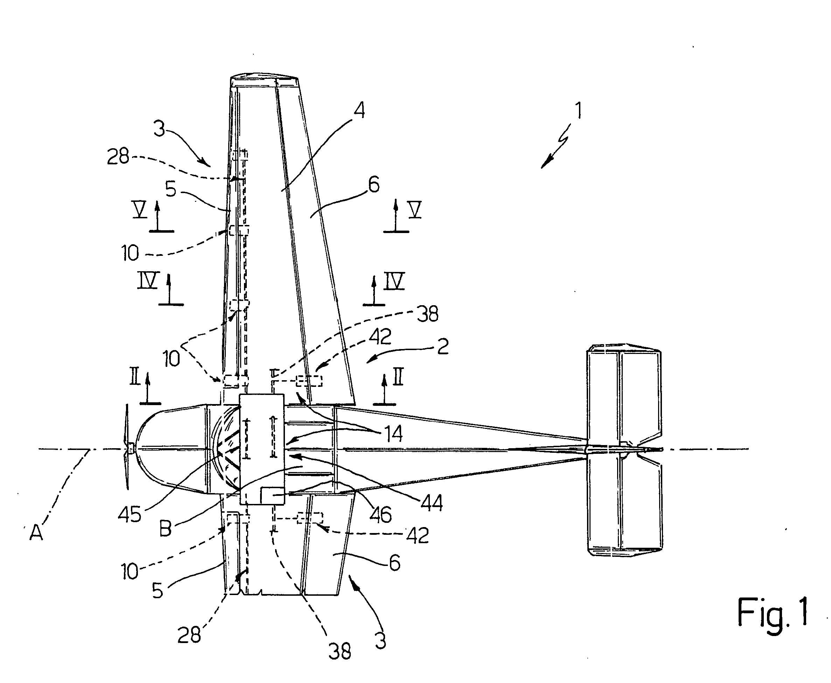

In figure 1, 1 indicates, overall, an ultralight aircraft. The aircraft 1 comprises a fuselage B and a wing assembly 2, in turn comprising a pair of wings 3 protruding from the fuselage B in opposite directions and substantially orthogonal to a longitudinal direction A of the aircraft 1.

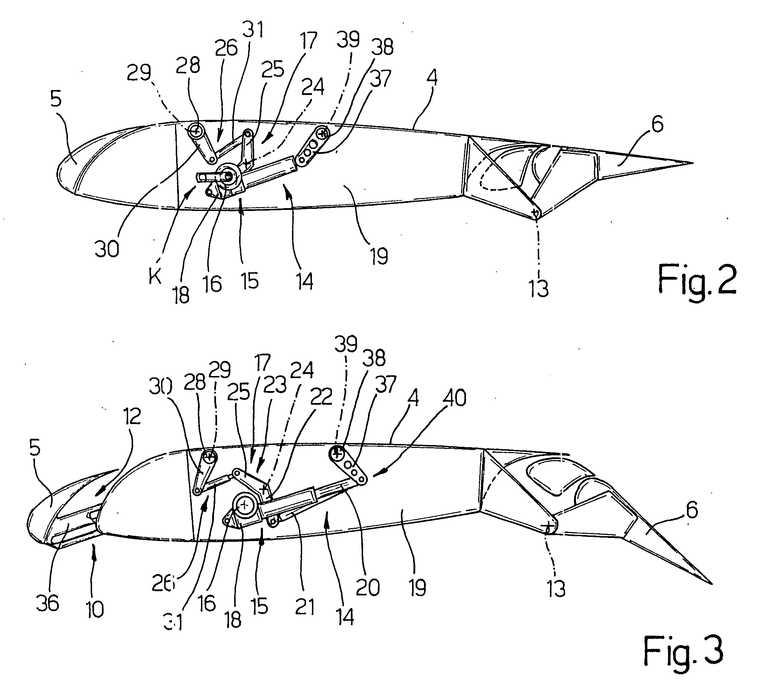

Each wing 3 comprises an elongated central portion 4 integrally connected to the fuselage B, and two lateral elongated portions indicated by 5 and 6 arranged at the front and rear respectively of the related intermediate portion 2 in the travel direction of the aircraft 1. According to the illustration of figure 1 and, in particular, of figures 3 to 5, each portion 5 is coupled to the related intermediate portion 2 by means of a plurality of runner and slide assemblies 10, known per se and therefore not described in detail, constituting a part of the wing assembly 2 and distributed along the portions 4 and 5 to enable portion 5 to translate with respect to portion 4 between an extracted portion, illustrated in figures 3 to 5, in which the portions 4 and 5 define between them an elongated section 12, and a retracted position, illustrated in figure 2, in which the portion 5 substantially constitutes a front elongation of the related portion 4.

Again with reference to figures 2 to 5, each movable portion 6 is hinged, in a known way, to the related portion 4 to rotate around a respective horizontal hinge axis 13 crosswise to the direction A between a raised position, illustrated in figure 2, in which the portions 6 constitute a rear extension of the related fixed portions 4, and a lowered position rotated downwards, illustrated in figures 3 to 5.

The portions 5 and 6 of the wings 2 are moved simultaneously and synchronously by means of an operating device 14 which can be controlled by the pilot and constituting part of the wing assembly 2. The device 14 comprises one single main actuator 15 (figures 2 and 3) driven by one single electric motor 16 or by a crank or knob K (figure 2) which can be operated by the pilot, and a mechanical lever transmission 17 positioned between the actuator 15 and the movable elongated portions 5 and 6 of the wings 3.

The actuator 15 comprises an outer shell 18, which is hinged to an end crosswise partition 19 of one of the wings 3, and from which a control rod 20 protrudes (figure 3) translating axially due to the thrust generated by the motor 16 or crank or knob K. The transmission 17 comprises a rocker lever 23, which is parallel and hinged to the partition 19 to pivot around an axis 24 and has an arm 22 coupled to the rod 20 by means of a tie rod/strut 21, and an arm 25 coupled, by means of a toggle assembly 26, to a respective torsion bar 28 hinged to the related fixed intermediate portion 4 to rotate around a fixed axis 29 parallel to the axis 24. In this specific case, the toggle assembly 26 comprises a crank 30 inserted on the torsion bar 28 and a tie rod/strut 31 connecting the crank 30 to the arm 25 (figures 2 and 3).

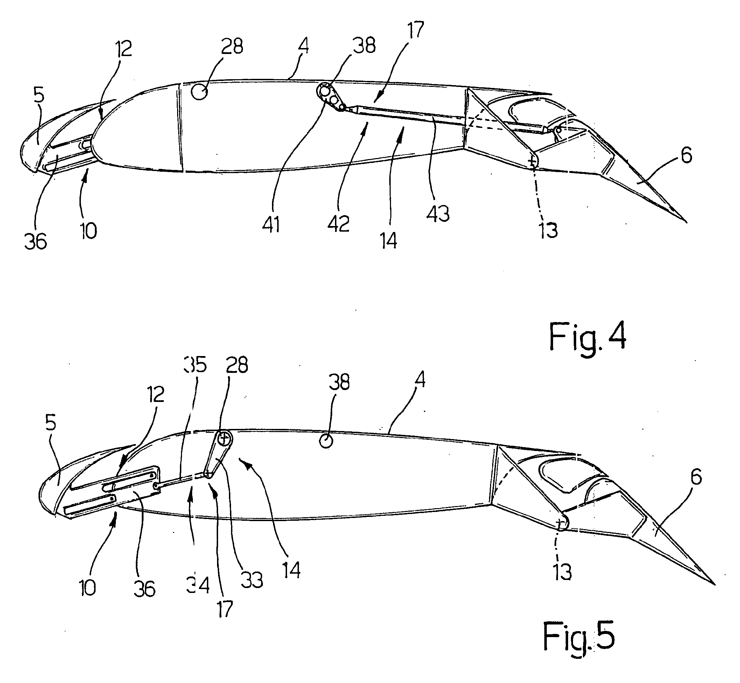

For each runner and slide assembly 10, a respective crank 33 (figure 5) is also inserted on each bar 29, rotated at an angle with respect to the related crank 30 and constituting part of a respective connecting rod-crank assembly 34, the connecting rod 35 of which is hinged, on the one side to the related crank and, on the other, to a slide 36 of the respective runner and slide assembly 10 (figure 5).

Again with reference to figures 2 and 3, the control rod 20 is furthermore hinged at the free end of a further crank 37, which is inserted on a further torsion bar 38 and hinged to the tie rod/strut 21 at the same hinging point as the rod 20 to define, with the tie rod/strut 21, an angle connection toggle transmission 40 of the bar 38 to the rocker lever 23. The bar 38 is hinged to the related fixed elongated portion 4 to rotate around a fixed hinge axis 39 substantially parallel to the axis 29. A crank 41 (figure 4) rotated at an angle with respect to the crank 37 is inserted on the torsion bar 38. The crank 41 constitutes part of a toggle assembly 42 (figures 1 and 4) constituting part of the transmission 17 and comprising a tie rod/strut 43 hinged, on one side, to the crank 41 and, on the other, to the related portion 6.

Again with reference to figure 1, each of the torsion bars 28 and 38 of each wing 3 is connected angularly integral with a corresponding torsion bar 28,38 of the other wing 3 by means of a mechanical connection unit 44, known per se, constituting part of the transmission 17 and comprising a pair of sections 45 of torsion bar extending across the fuselage B and if necessary a motorised or manual auxiliary actuator 46 connected in parallel to the actuator 15.

With respect to the known solutions in use, via the actuator 15 the pilot simultaneously and synchronously varies the positions of the front portions 5 and rear portions 6 of each wing 3 with respect to the related fixed intermediate portion 4. In particular, by operating the actuator 15, the transmission described enables the pilot to move the rear portions 6 to a plurality of functional positions, each corresponding to a univocal position of the front portions 5. The combined action of adjustment of the position of the movable portions 5 and 6 means, again with respect to the known solutions, that the lift capacity of the wing profile can be increased in a controlled manner and/or much lower stalling speeds can be obtained, therefore making it possible to land on short runways. In particular, when the front portions 5 are arranged in their extended positions and the rear portions 6 are arranged in their lowered positions, as illustrated in figures 3, 4 and 5, the stalling speed reaches a minimum value which is decidedly below that of known aircraft while, when the front portions 5 are arranged in their retracted positions and the rear portions 6 are arranged in their raised positions, as illustrated in figure 2, the wing profile has a much higher degree of penetration than that of the known profiles, permitting the aircraft to reach decidedly higher maximum and cruising speeds than those of the known aircraft.

The use of one single actuator for control of both the front and rear portions of both the wings 3 and a particularly simple transmission in terms of construction means that the total weight of the aircraft can be kept well below the established maximum value. Lastly, the particular construction method of the transmission and the arrangement of the actuator 15 with respect to the transmission itself mean that an extremely compact operating unit can be obtained which can be coupled to one of the internal crosswise stiffening partitions of the wing or to a wall of the fuselage B, while use of the torsion bars running along the wings means that the control can be transmitted to units distributed along the wings themselves in an extremely simple but at the same time accurate manner occupying very limited space. In this regard it should be noted that the internal space of the wings, partially occupied by the stiffening partitions and/or ribs, is to a large extent occupied by the fuel tanks.

From the above it appears evident that modifications and variations that do not depart from the scope of the present invention can be made to the aircraft 1. In particular, the transmission positioned between the actuator and movable elongated portions could be further modified for the purpose of further limiting the overall dimensions and/or the weight or to vary the relative position of the front elongated portions with respect to the rear ones to obtain particular aircraft performance, while always maintaining the characteristic of parallel simultaneous control of movement of all the movable elongated parts of the wings.

From the above it furthermore appears evident that the wing assembly described can be applied also on other types of aircraft.

## Claims

1. Wing assembly (2) of an ultralight aircraft
(1) comprising two opposed wings (3), each of which comprises a fixed intermediate elongated portion (4) designed to be integrally connected to a fuselage (B) of the aircraft (1), and two respective movable elongated portions (5)(6) arranged on opposite sides of the related intermediate elongated portion (4); one single main actuator (15) for operation of said movable elongated portions (5) (6) of both said wings (3), and transmission means positioned between said movable elongated portions (5) (6) and said main actuator (15), said single main actuator comprising one single electric drive motor; said transmission means comprises lever transmission means (17) to simultaneously and synchronously move said movable elongated portions (5)(6) with respect to said related fixed elongated portions (4); **characterized in that** said lever transmission means (17) comprising for each said wing (3), two torsion bars (28) (38) hinged to said fixed elongated portion (4) to rotate around respective hinge axes (29)(39) and coupled to said single main actuator (15), on one side, and to a respective said movable elongated portion (5) (6) on the other, and a mechanical connection unit (44) positioned between each said torsion bar (28) (38) of one of the wings (3) and the corresponding torsion bar of the other wing (3) so that the corresponding torsion bars are angularly integral with each other.

2. - Assembly as claimed in claim 1, **characterized in that** said main actuator (15) comprises at least one crank (K) which can be operated manually by the pilot.

3. - Assembly as claimed in claim 1 or 2, **characterized in that** said main actuator (15) comprises one single translating operating rod (20) coupled to said transmission means (17).

4. - Assembly as claimed in any one of the previous claims, **characterized in that** said transmission means (17) comprise a rocker lever (23) pivoting around a fixed hinge axis (24).

5. - Assembly as claimed in claim 4, **characterized in that** each of said torsion bars (28) (38) is connected to said rocker lever (23) by means of a respective toggle assembly (26) (40).

6. - Assembly as claimed in claim 5, **characterized in that** one (28) of said torsion bars (28) (38) is connected to the respective said movable elongated portion (5) by means of at least one connecting rod-crank assembly (34).

7. - Assembly as claimed in one of the claims from 4 to 6, **characterized in that** one (38) of said torsion bars (28)(38) is connected to the respective said movable elongated portion (6) by means of at least one further toggle assembly (42).

8. - Assembly as claimed in any one of the previous claims, **characterized in that** said main actuator (15) and at least part of said transmission means (17) are supported by a fixed partition (19) between one of said wings (3) and said fuselage (B).

9. - Assembly as claimed in any of the previous claim **characterized in that** said mechanical connection unit (44) comprises a pair of torsion bars (45) extending across the fuselage (B).

10. - Ultralight aircraft (1) comprising a fuselage (B) and a wing assembly (2) produced according to any one of the preceding claims.

11. - Aircraft as claimed in claim 10, **characterized in that** said fuselage (B) comprises a mounting portion supporting said main actuator (15) and at least part of said transmission means (17).

## Patentansprüche

1. Flügelanordnung (2) eines Ultraleichtflugzeugs (1), umfassend zwei gegenüberliegende Flügel (3), von denen jeder einen feststehenden länglichen Zwischenabschnitt (4), der derart ausgebildet ist, daß er einstückig mit einem Flugzeugrumpf (B) des Flugzeugs (1) verbunden ist, und jeweils zwei bewegliche längliche Abschnitte (5) (6), die an gegenüberliegenden Seiten des jeweiligen länglichen Zwischenabschnitts (4) angeordnet sind, umfaßt; ein einzelnes Hauptbetätigungsorgan (15) zur Bedienung der beweglichen länglichen Abschnitte (5) (6) der beiden Flügel (3); und Übertragungsmittel, die zwischen den beweglichen länglichen Abschnitten (5) (6) und dem Hauptbetätigungsorgan (15) angeordnet sind, wobei das einzelne Hauptbetätigungsorgan einen einzelnen elektrischen Antriebsmotor und das Übertragungsmittel Hebelübertragungsmittel (17) zum simultanen und synchronen Bewegen der beweglichen länglichen Abschnitte (5) (6) in Bezug auf die jeweiligen feststehenden länglichen Abschnitte (4) umfasst, **dadurch gekennzeichnet, daß** das Hebelübertragungsmittel (17) für jeden Flügel (3) zwei Torsionswellen (28) (38), die schwenkbar mit dem feststehenden länglichen Abschnitt (4) verbunden sind, um um jeweilige Schwenkachsen (29) (39) zu rotieren, und die mit dem einzelnen Hauptbetätigungsorgan (15) auf einer Seite, und auf der anderen Seite mit einem jeweiligen beweglichen länglichen Abschnitt (5) (6) gekoppelt sind, und eine mechanische Verbindungseinheit (44) umfaßt, die zwischen jeder der Torsionswellen (28) (38) eines der Flügel (3) und der entsprechenden Torsionswelle des anderen Flügels (3) angeordnet ist, so daß die entsprechenden Torsionswellen winkelförmig einstückig miteinander sind.

2. Anordnung nach Anspruch 1, **dadurch gekennzeichnet, daß** das Hauptbetätigungsorgan (15) wenigstens eine Kurbel (K) umfaßt, die durch den Piloten manuell betätigt werden kann.

3. Anordnung nach einem der Ansprüche 1 oder 2, **dadurch gekennzeichnet, daß** Hauptbetätigungsorgan (15) eine einzelne übertragende Betätigungsstange (20) umfaßt, die mit den Übertragungsmitteln (17) gekoppelt ist.

4. Anordnung nach einem der vorhergehenden Ansprüche, **dadurch gekennzeichnet, daß** die Übertragungsmittel (17) einen Kipphebel (23) umfassen, der um eine feststehende Schwenkachse (24) angelenkt ist.

5. Anordnung nach Anspruch 4, **dadurch gekennzeichnet, daß** jede der Torsionswellen (28) (38) mit dem Kipphebel (23) mittels einer jeweiligen Gelenkanordnung (26) (40) verbunden ist.

6. Anordnung nach Anspruch 5, **dadurch gekennzeichnet, daß** eine (28) der Torsionswellen (28) (38) mit dem jeweiligen beweglichen länglichen Abschnitt (5) mittels wenigstens einer Verbindungsstangenkurbelanordnung (34) verbunden ist.

7. Anordnung nach einem der Ansprüche 4 bis 6, **dadurch gekennzeichnet, daß** eine (38) der Torsionswellen (28) (38) mit dem jeweiligen beweglichen länglichen Abschnitt (6) mittels wenigstens einer weiteren Gelenkanordnung (42) verbunden ist.

8. Anordnung nach einem der vorhergehenden Ansprüche, **dadurch gekennzeichnet, daß** das Hauptbetätigungsorgan (15) und wenigstens ein Teil der Übertragungsmittel (17) durch eine feststehende Teilung (19) zwischen einem der Flügel (3) und dem Flugzeugrumpf (B) abgestützt wird.

9. Anordnung nach einem der vorhergehenden Ansprüche, **dadurch gekennzeichnet, daß** die mechanische Verbindungseinheit (44) ein Paar Torsionswellen (45) umfaßt, die sich durch den Flugzeugrumpf (B) erstrecken.

10. Ultraleichtflugzeug (1) umfassend einen Flugzeugrumpf (B) und eine Flügelanordnung (2), welche nach einem der vorhergehenden Ansprüche hergestellt ist.

11. Flugzeug nach Anspruch 10, **dadurch gekennzeichnet, daß** der Flugzeugrumpf (B) einen Befestigungsabschnitt umfaßt, der das Hauptbetätigungsorgan (15) und wenigstens einen Teil der Übertragungsmittel (17) abstützt.

## Revendications

1. Ensemble d'aile (2) pour un avion ultraléger (1) comprenant deux ailes opposées (3), chacune comprenant une partie allongée intermédiaire fixe (4) conçue pour être reliée de manière solidaire à un fuselage (B) de l'avion (1), et deux parties allongées mobiles respectives (5) (6) disposées sur des côtés opposés de la partie allongée intermédiaire (4) correspondante ; une seul actionneur principal (15) pour faire fonctionner lesdites parties allongées mobiles (5) (6) des deux dites ailes (3) ; et des moyens de transmission positionnés entre lesdites parties allongées mobiles (5) (6) et ledit actionneur principal (15), ledit seul actionneur principal comprenant un seul moteur d'entraînement électrique, ledit moyen de transmission comprenant un moyen de transmission par levier (17) pour déplacer de manière simultanée et synchrone lesdites parties allongées mobiles (5) (6) par rapport auxdites parties allongées fixes correspondantes (4) ; **caractérisé en ce que** ledit moyen de transmission par levier (17) comprend pour chaque dite aile (3) deux barres de torsion (28) (38) articulées sur ladite partie allongée fixe (4) pour tourner autour d'axes d'articulation respectifs (29) (39) et couplées audit seul actionneur principal (15), d'un côté, et à une dite partie allongée mobile (5) (6) respective, de l'autre côté, et une unité d'accouplement mécanique (44) positionnée entre chaque dite barre de torsion (28) (38) de l'une des ailes (3) et la barre de torsion correspondante de l'autre aile (3) de façon telle que les barres de torsion correspondantes sont solidaires entre elles de manière angulaire.

2. Ensemble selon la revendication 1, **caractérisé en ce que** ledit actionneur principal (15) comprend au moins une manivelle (K) pouvant être commandée manuellement par le pilote.

3. Ensemble selon la revendication 1 ou 2, **caractérisé en ce que** ledit actionneur principal (15) comprend une seule tige de translation (20) accouplée audit moyen de transmission (17).

4. Ensemble selon l'une quelconque des revendications précédentes, **caractérisé en ce que** ledit moyen de transmission (17) comprend un levier oscillant (23) pivotant autour d'un axe d'articulation fixe (24).

5. Ensemble selon la revendication 4, **caractérisé en ce que** chacune desdites barres de torsion (28) (38) est reliée audit levier oscillant (23) au moyen d'un ensemble genouillère respectif (26, 40).

6. Ensemble selon la revendication 5, **caractérisé en ce que** l'une (28) des barres de torsion (28) (38) est reliée à ladite partie allongée mobile (4) respective par au moins un dispositif bielle-manivelle (34).

7. Ensemble selon l'une des revendications 4 à 6, **caractérisé en ce que** l'une (38) desdites barres de torsion (28, 38) est reliée à ladite partie allongée mobile (6) respective par au moins un autre ensemble genouillère (42).

8. Ensemble selon l'une quelconque des revendications précédentes, **caractérisé en ce que** ledit actionneur principal (15) et au moins une partie dudit moyen de transmission (17) sont supportés par une cloison fixe (19) entre l'une desdites ailes (3) et ledit fuselage (B).

9. Ensemble selon l'une quelconque des revendications précédentes, **caractérisé en ce que** ladite unité d'accouplement mécanique (44) comprend une paire de barres de torsion (45) s'étendant à travers le fuselage (B).

10. Avion ultra-léger (1) comprenant un fuselage (B) et un ensemble d'aile (2) réalisés selon l'une quelconque des revendications précédentes.

11. Avion selon la revendication 10 **caractérisé en ce que** ledit fuselage (B) comprend une partie de montage supportant ledit actionneur principal (15) et au moins une partie dudit moyen de transmission (17).
